# EUROPÄISCHE PATENTSCHRIFT

(11) **EP 3 175 941 B1**
(45) Veröffentlichungstag und Bekanntmachung des Hinweises auf die Patenterteilung: **01.12.2021**
(21) Anmeldenummer: 16195644.6
(22) Anmeldetag: 26.10.2016
(51) Int. Cl.: B22F 5/00, B33Y 10/00, B33Y 30/00, B33Y 50/02, B22F 10/28, B22F 10/366, B22F 10/38, B28B 1/00, B33Y 80/00, C22C 1/04

(54) **VERFAHREN UND VORRICHTUNG ZUM ADDITIVEN HERSTELLEN ZUMINDEST EINES BAUTEILBEREICHS EINES BAUTEILS**
METHOD AND APPARATUS FOR ADDITIVE MANUFACTURE OF AT LEAST ONE COMPONENT AREA OF A COMPONENT
PROCÉDÉ ET DISPOSITIF DE FABRICATION ADDITIVE D'AU MOINS UNE PARTIE D'UN COMPOSANT

(30) Priorität: 04.12.2015 DE 102015224324
(43) Veröffentlichungstag der Anmeldung: 07.06.2017
(73) Patentinhaber: MTU Aero Engines AG, 80995 München (DE)
(72) Erfinder: Schlick, Georg, 80809 München (DE); Maiwald-Immer, Tobias, 80999 München (DE); Ladewig, Alexander, 83707 Bad Wiessee (DE); Jakimov, Andreas, 85777 Fahrenzhausen (DE); Casper, Johannes, 85737 München (DE)

(56) Entgegenhaltungen:
- EP-A1- 1 419 836
- EP-A1- 2 628 585
- DE-A1- 19 606 128
- DE-C1- 19 649 865
- GB-A- 2 378 151

## Beschreibung

Die Erfindung betrifft ein Verfahren und eine Vorrichtung zum additiven Herstellen zumindest eines Bauteilbereichs eines Bauteils.

Aus dem Stand der Technik sind additive bzw. generative Herstellungsverfahren zur schnellen Herstellung von Prototypen oder zur Herstellung von Bauteilen, die mit anderen Verfahren schwierig herzustellen sind, bekannt. Bei diesen Verfahren wird durch schichtweisen Auftrag von mindestens einem pulverförmigen Bauteilwerkstoff auf einer Bauteilplattform im Bereich einer Aufbau- und Fügezone sowie durch schichtweises und lokales Aufschmelzen des Bauteilwerkstoffs ein entsprechender Bauteilbereich bzw. ein vollständiges Bauteil schichtweise hergestellt. Die Zufuhr der Energie erfolgt hierbei über wenigstens einen Hochenergiestrahl, beispielsweise durch Laserstrahlen eines CO₂-Lasers, Nd:YAG-Lasers, Yb-Faserlasers, Diodenlasers oder dergleichen und/oder durch Elektronenstrahlen. Dabei existieren verschiedene Scan- bzw. Belichtungsstrategien, um den Hochenergiestrahl und die Aufbau- und Fügezone relativ zueinander zu bewegen. Aus der EP 1 419 836 A1 ist beispielsweise ein Verfahren bekannt, bei welchem die Pulverschicht derart belichtet bzw. aufgeschmolzen wird, dass erste Spuren oder Schmelzspuren entstehen. Dabei wird der Spurabstand in einem ersten Arbeitsschritt so groß gewählt, dass die ersten Spuren sich nicht überlappen. Der ausgelassene oder nicht belichtete Bereich zwischen den ersten Spuren, in dem sich nicht erschmolzenes Bauteilpulver befindet, wird anschließend in einem nachfolgenden Arbeitsgang aufgeschmolzen, wodurch zweite Spuren erzeugt werden, die auf beiden Seiten mit den ersten Spuren überlappen. Dieses Verfahren zielt auf die Herstellung einer möglichst glatten Bauteilschicht bevor die nächste Bauteilschicht aufgetragen bzw. aufgebaut wird.

Aus der EP 1 419 836 A1 ist ein Verfahren zur Herstellung eines Formkörpers bekannt, bei welchem ein Pulver schichtweise auf eine Oberfläche aufgetragen und durch Eintrag von Strahlungsenergie verfestigt wird. Dabei werden parallele erste Spuren ohne seitliche Überlappung erzeugt und sich mit den ersten Spuren schneidende Spuren von Strahlungsenergie eingetragen, wobei Kreuzungspunkte der ersten und zweiten Spuren zumindest teilweise aufgeschmolzen werden.

Aus der DE 196 49 865 C1 ist ebenfalls ein Verfahren zum Herstellen eines Formkörpers bekannt, bei welchem ein bindemittel- und flußmittelfreies metallisches Werkstoffpulver durch einen Laserstrahl unter Schutzgasatmosphäre aufgeschmolzen wird, wobei der Laserstrahl in mehreren Spuren so geführt wird, dass jede folgende Spur die vorherige Spur teilweise überlappt.

Die GB 2 378 151 A befasst sich mit einem Schichtbauverfahren, bei welchem eine Pulverschicht auf eine absenkbare Bauplattform aufgebracht und mit einem Laser in Form paralleler Rasterlinien zu einer Bauteilschicht verfestigt wird. Anschließend wird die Bauplattform abgesenkt, eine neue Pulverschicht aufgetragen und erneut in Form paralleler Rasterlinien verfestigt, wobei die Rasterlinien bezogen auf die darunterliegende Bauteilschicht um die Hälfte des Abstands zwischen den Rasterlinien verschoben sind.

Aus der EP 2 628 585 A1 ist ein Verfahren zum Aufschmelzen oder Sintern von Pulverpartikeln zur schichtweisen Herstellung von dreidimensionalen Objekten bekannt. Das Aufschmelzen oder Sintern erfolgt dabei mit Hilfe von elektromagnetischer Strahlung, die in Form nichtlinearer Verfestigungsspuren über die zu verfestigende Oberfläche des Pulvers gefahren wird.

Aus der DE 196 06 128 A1 ist ein Verfahren zum Aufschmelzen von Pulverpartikeln zur schichtweisen Herstellung von dreidimensionalen Objekten bekannt. Bei diesem Verfahren wird die aufgebrachte Pulverschicht mit einem Laser in Form paralleler Rasterlinien zu einer Bauteilschicht verfestigt. Eine verschobene Bestrahlung von parallelen Rasterlinien wird für jede Pulverschicht durchgeführt.

Als nachteilig an dem bekannten Verfahren ist der Umstand anzusehen, dass das Endgefüge der derart erzeugten Bauteilbereiche bzw. Bauteile eine vergleichsweise geringe Rissbeständigkeit aufweist, so dass die entsprechenden Bauteile für zahlreiche Anwendungen nicht verwendet werden können. Beispielsweise eigenen sich die Bauteile nicht oder nur begrenzt für den Einsatz in Strömungsmaschinen wie etwa Flugtriebwerken und dergleichen, insbesondere wenn sie additiv aus schlecht schweißbaren Metalllegierungen hergestellt sind.

Eine Aufgabe der vorliegenden Erfindung ist es, ein Verfahren zum additiven Herstellen zumindest eines Bauteilbereichs eines Bauteils zu schaffen, mit welchem Gefügestrukturen mit verbesserter Rissbeständigkeit herstellbar sind. Eine weitere Aufgabe der Erfindung ist es, eine Vorrichtung anzugeben, welche die additive Herstellung zumindest eines Bauteilbereichs eines Bauteils mit verbesserter Rissbeständigkeit ermöglicht.

Die Aufgaben werden erfindungsgemäß durch ein Verfahren mit den Merkmalen des Patentanspruchs 1 sowie eine Vorrichtung mit den Merkmalen des Patentanspruchs 6 gelöst.

Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte und umgekehrt anzusehen sind.

Ein erster Aspekt der Erfindung betrifft ein Verfahren zum additiven Herstellen oder zur Reparatur oder Wiederherstellung zumindest eines Bauteilbereichs eines Bauteils, insbesondere eines Bauteils einer Strömungsmaschine. Das erfindungsgemäße Verfahren umfasst zumindest die Schritte a) Auftragen wenigstens einer ersten Pulverschicht auf eine Bauteilplattform im Bereich einer Aufbau- und Fügezone, b) lokales Verschmelzen der ersten Pulverschicht, indem wenigstens ein Hochenergiestrahl im Bereich der Aufbau- und Fügezone relativ zur Bauteilplattform bewegt wird und die erste Pulverschicht selektiv beaufschlagt, so dass parallele erste Spuren in Form einer Parallelenschar durch teilweises oder vollständiges Aufschmelzen der ersten Pulverschicht erzeugt werden, wobei zwischen den ersten Spuren erste Senken gebildet werden, c) Auftragen wenigstens einer zweiten Pulverschicht auf die Bauteilplattform im Bereich der Aufbau- und Fügezone ohne Absenken der Bauteilplattform, so dass die zweite Pulverschicht die ersten Senken teilweise oder vollständig auffüllt, und d) lokales Verschmelzen der zweiten Pulverschicht, indem der Hochenergiestrahl im Bereich der Aufbau- und Fügezone relativ zur Bauteilplattform bewegt wird und die zweite Pulverschicht selektiv beaufschlagt, so dass dass zu den ersten Spuren parallele zweite Spuren durch teilweises oder vollständiges Aufschmelzen der in den ersten Senken angeordneten zweiten Pulverschicht erzeugt werden, wobei die ersten Spuren und die zweiten Spuren miteinander fluchten bzw. die gleiche Höhe besitzen, und wobei ein Pulver einer schwer schweißbaren Metalllegierung zum Aufbringen der ersten und/oder der zweiten Pulverschicht verwendet wird. Mit anderen Worten ist es erfindungsgemäß vorgesehen, dass in der ersten aufgetragenen Pulverschicht mit Hilfe des Hochenergiestrahls zunächst erster Spuren in Form einer Parallelenschar unter teilweisem oder vollständigem Aufschmelzen der Pulverschicht erzeugt werden, wobei der Abstand der ersten Spuren zueinander so gewählt wird, dass in den Zwischenbereichen benachbarter Spuren jeweilige erste Senken entstehen. Durch die Kapillarwirkung des Schmelzbades kommt es zu einer Materialanhäufung ("Hügel") in der Mitte jeder Spur, wodurch ein welliges Profil auf der verfestigten Oberfläche erzeugt wird. Im folgenden Schritt c) wird eine neue, zweite Pulverschicht aufgezogen, so dass das dabei verwendete Pulver die Zwischenbereiche bzw. ersten Senken teilweise oder vollständig wieder auffüllt. Anschließend werden zweite Spuren im Bereich der vorherigen ersten Senken belichtetet. Das resultierende Gefüge ähnelt damit einer ineinander verschachtelten Wellenstruktur. Hierdurch besitzt der derart hergestellte Bauteilbereich eine verbesserte Rissbeständigkeit, da im Endgefüge eine Rissbildung stark reduziert oder sogar vollständig verhindert wird. Damit werden im Vergleich zu bekannten Herstellungsverfahren die mechanische und die thermische Widerstandsfähigkeit des Bauteils bei ansonsten vergleichbaren Herstellungszeiten und -kosten vorteilhaft gesteigert. Das erfindungsgemäße Verfahren kann dabei grundsätzlich zur Herstellung eines bestimmten Bauteilbereichs oder eines vollständigen Bauteils, aber auch zur Reparatur oder Wiederherstellung eines Bauteilbereichs eines Bauteils verwendet werden.

In einer vorteilhaften Ausgestaltung der Erfindung werden die Schritte a) bis d) mehrfach und/oder bis zur Fertigstellung des Bauteilbereichs oder des Bauteils wiederholt. Hierdurch können die Vorteile des erfindungsgemäßen Verfahrens auf entsprechend größere Bauteilbereiche oder sogar auf das gesamte Bauteil ausgedehnt werden.

Eine besonders hohe Gefügegüte mit entsprechend geringer Rissbildungsneigung wird in weiterer Ausgestaltung der Erfindung dadurch ermöglicht, dass die ersten Spuren bei jeder Wiederholung der Schritte a) bis d) über den ersten Spuren einer darunter liegenden Bauteilschicht erzeugt werden und dass die zweiten Spuren bei jeder Wiederholung der Schritte a) bis d) über den zweiten Spuren einer darunter liegenden Bauteilschicht erzeugt werden.

In einer weiteren vorteilhaften Ausgestaltung der Erfindung ist es vorgesehen, dass zwischen den zweiten

Spuren zweite Senken gebildet werden. Es ist möglich, die zweiten Spuren höher als die ersten Spuren auszubilden, so dass die ersten Spuren und die zweiten Spuren abwechselnd ein welliges oder wellenförmiges Profil auf der verfestigten Oberfläche ausbilden. Ebenso kann vorgesehen sein, dass die zweite Pulverschicht mit lokal unterschiedlichen Dicken aufgebracht wird.

Weitere Vorteile ergeben sich, wenn die ersten Spuren mit einer seitlichen Überlappung von höchstens 30 % erzeugt werden. Mit anderen Worten ist es vorgesehen, dass die ersten Spuren eine Überlappung von 30 %, 29 %, 28 %, 27 %, 26 %, 25 %, 24 %, 23 %, 22 %, 21 %, 20 %, 19 %, 18 %, 17 %, 16 %, 15 %, 14 %, 13 %, 12 %, 11 %, 10 %, 9 %, 8 %, 7 %, 6 %, 5 %, 4 %, 3 %, 2 %, 1 % oder weniger besitzen. Hierdurch können die Geometrie der "Hügel" und "Täler", das heißt der ersten Spuren und der ersten Senken optimal an die jeweiligen Herstellungsparameter, beispielsweise an Pulverauftrag, Pulverwerkstoff, Spurabstand, Belichtungsteilung, Versatz der Scanvektoren etc., angepasst werden.

Eine zusätzliche Verbesserung der Gefügestruktur wird in weiterer vorteilhafter Ausgestaltung der Erfindung dadurch erreicht, dass die ersten Spuren in Schritt b) derart aufgeschmolzen werden, dass die ersten Senken pulverfrei sind. Mit anderen Worten ist es vorgesehen, dass sich nach Schritt b) zumindest im Bereich der ersten Spuren kein loses Pulvermaterial mehr auf der Oberfläche des Bauteils oder Bauteilbereichs befindet. Damit können die zweiten Spuren anschließend besonders kontrolliert und ohne die Gefahr von Gefügefehlern hergestellt werden.

Erfindungsgemäß wird ein Pulver einer schwer schweißbaren Metalllegierung zum Aufbringen der ersten und/oder der zweiten Pulverschicht verwendet. Mit Hilfe des erfindungsgemäßen Verfahrens können beispielsweise hochtemperaturfeste Nickelbasislegierungen wie etwa Mar M-247, Inconel 718 (IN718), Inconel 738 (IN738), Waspaloy, C263 oder andere, die als schwer schweißbar gelten und daher bislang nicht oder nicht zufriedenstellend mit additiven Herstellungsverfahren verarbeitet werden konnten, zur rissfreien Bauteilherstellung verwendet werden.

Ein zweiter Aspekt der Erfindung betrifft eine Vorrichtung zur additiven Herstellung oder zur Reparatur oder Wiederherstellung zumindest eines Bauteilbereichs eines Bauteils, insbesondere eines Bauteils einer Strömungsmaschine. Die Vorrichtung umfasst mindestens eine Pulverzuführung zum Auftrag von mindestens einer Pulverschicht auf eine Aufbau- und Fügezone einer Bauteilplattform, mindestens eine Strahlungsquelle zum Erzeugen wenigstens eines Hochenergiestrahls, mittels welchem die wenigstens eine Pulverschicht im Bereich der Aufbau- und Fügezone lokal verschmelzbar ist, und eine Bewegungseinrichtung, mittels welcher der wenigstens eine Hochenergiestrahl und die Bauteilplattform relativ zueinander bewegbar sind. Dabei wird erfindungsgemäß eine additive Herstellung zumindest eines Bauteilbereichs eines Bauteils mit verbesserter Rissbeständigkeit dadurch ermöglicht, dass eine Steuereinrichtung vorgesehen ist, welche dazu ausgebildet ist, die Bewegungseinrichtung zunächst derart anzusteuern, dass der Hochenergiestrahl eine erste Pulverschicht selektiv beaufschlagt, so dass parallele erste Spuren in Form einer Parallelenschar durch teilweises oder vollständiges Aufschmelzen der ersten Pulverschicht erzeugt werden, wobei die ersten Spuren seitlich überlappen und wobei zwischen den ersten Spuren erste Senken gebildet werden, die Pulverzuführung anschließend derart anzusteuern, dass wenigstens eine zweite Pulverschicht ohne Absenken der Bauteilplattform auf die Bauteilplattform im Bereich der Aufbau- und Fügezone aufgetragen wird, welche die ersten Senken teilweise oder vollständig auffüllt, und die Bewegungseinrichtung anschließend derart anzusteuern, dass der Hochenergiestrahl die zweite Pulverschicht selektiv beaufschlagt, so dass zu den ersten Spuren parallele zweite Spuren durch teilweises oder vollständiges Aufschmelzen der in den ersten Senken angeordneten zweiten Pulverschicht erzeugt werden, wobei die ersten Spuren und die zweiten Spuren miteinander fluchten bzw. die gleiche Höhe besitzen, wobei ein Pulver einer schwer schweißbaren Metalllegierung zum Aufbringen der ersten und/oder der zweiten Pulverschicht verwendet wird. Mit anderen Worten ist die erfindungsgemäße Vorrichtung mit Hilfe der Steuereinrichtung dazu ausgelegt, in der ersten aufgetragenen Pulverschicht mit Hilfe des Hochenergiestrahls zunächst erster Spuren in Form einer Parallelenschar unter teilweisem oder vollständigem Aufschmelzen der Pulverschicht zu erzeugen, wobei der Abstand der ersten Spuren zueinander so gewählt wird, dass in den Zwischenbereichen benachbarter Spuren jeweilige erste Senken entstehen. Durch die Kapillarwirkung des Schmelzbades kommt es zu einer Materialanhäufung ("Hügel") in der Mitte jeder Spur, wodurch ein welliges Profil auf der verfestigten Oberfläche erzeugt wird. Anschließend wird mit Hilfe der Pulverzuführung eine neue, zweite Pulverschicht aufgezogen, so dass das dabei verwendete Pulver die Zwischenbereiche bzw. ersten Senken teilweise oder vollständig wieder auffüllt. Anschließend werden zweite Spuren im Bereich der vorherigen ersten Senken belichtetet. Das resultierende Gefüge ähnelt damit einer ineinander verschachtelten Wellenstruktur. Hierdurch besitzt der derart hergestellte Bauteilbereich eine verbesserte Rissbeständigkeit, da im Endgefüge eine Rissbildung stark reduziert oder sogar vollständig verhindert wird. Damit werden im Vergleich zu bekannten Vorrichtungen die mechanische und die thermische Widerstandsfähigkeit des Bauteils bei ansonsten vergleichbaren Herstellungszeiten und -kosten vorteilhaft gesteigert. Die erfindungsgemäße Vorrichtung kann dabei grundsätzlich zur Herstellung eines bestimmten Bauteilbereichs oder eines vollständigen Bauteils, aber auch zur Reparatur oder Wiederherstellung eines Bauteilbereichs eines Bauteils verwendet werden. Erfindungsgemäß ist die Vorrichtung dazu gesteuert, ein Verfahren gemäß dem ersten Erfindungsaspekt durchzuführen. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung ist die Vorrichtung als selektive Laserschmelzvorrichtung und/oder als Elektronenstrahlschmelzvorrichtung ausgebildet. Die Zufuhr der zum Aufschmelzen notwendigen Energie kann damit in Abhängigkeit des Bauteils, des Pulverwerkstoffs und der Herstellungsparameter beispielsweise durch Laserstrahlen eines CO₂-Lasers, Nd:YAG-Lasers, Yb-Faserlasers, Diodenlasers oder dergleichen und/oder durch Elektronenstrahlen durchgeführt werden.

Ein Bauteil für eine Strömungsmaschine, welches nicht erfindungsgemäss ist, insbesondere für ein Flugtriebwerk, kann durch ein Verfahren gemäß dem ersten Erfindungsaspekt und/oder durch eine Vorrichtung gemäß dem zweiten Erfindungsaspekt erhalten sein. Damit ähnelt das Gefüge des Bauteils einer ineinander verschachtelten Wellenstruktur, so dass das Bauteil eine verbesserte Rissbeständigkeit besitzt, da im Endgefüge eine Rissbildung stark reduziert oder sogar vollständig verhindert wird. Damit werden die mechanische und die thermische Widerstandsfähigkeit des Bauteils bei ansonsten vergleichbaren Herstellungszeiten und -kosten vorteilhaft gesteigert. Weitere Merkmale und deren Vorteile sind den Beschreibungen des ersten und des zweiten Erfindungsaspekts zu entnehmen.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
Fig. 1 eine schematische Schnittansicht eines Bauteils während seiner erfindungsgemäßen Herstellung, bei welchem erste Spuren und erste Senken in einer ersten Pulverschicht erzeugt und die ersten Senken mit einer zweiten Pulverschicht aufgefüllt sind;
Fig. 2 eine schematische Schnittansicht des Bauteils während seiner erfindungsgemäßen Herstellung, bei welchem zweite Spuren durch Aufschmelzen der in den ersten Senken angeordneten zweiten Pulverschicht erzeugt sind;
Fig. 3 eine schematische Schnittansicht des Bauteils während seiner nicht-erfindungsgemäßen Herstellung, bei welchem zweite Spuren durch Aufschmelzen der in den ersten Senken angeordneten zweiten Pulverschicht erzeugt sind; und
Fig. 4 eine schematische Schnittansicht des Bauteils während seiner nicht-erfindungsgemäßen Herstellung, bei welchem in einem weiteren Verfahrensdurchgang erneut erste Spuren in einer ersten Pulverschicht erzeugt sind.

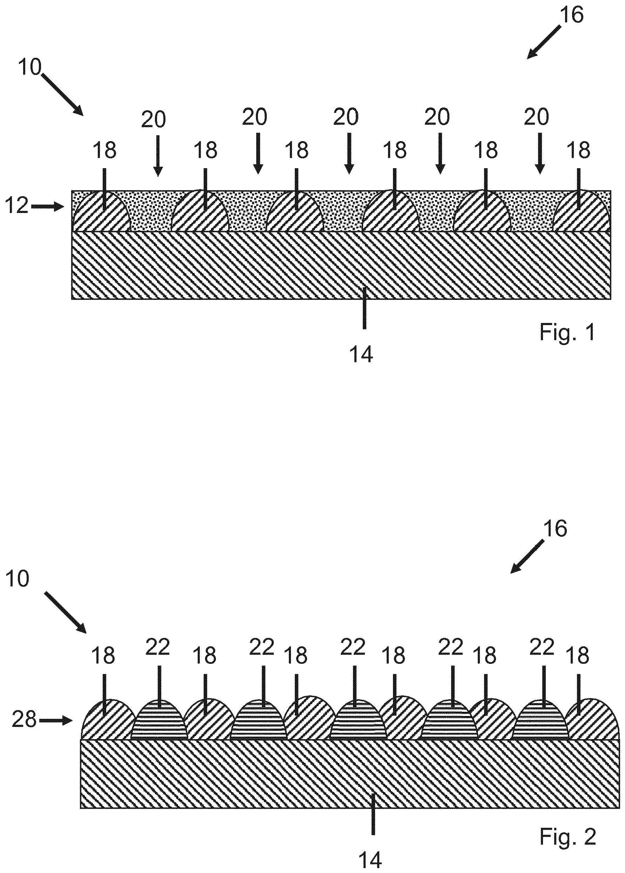

Fig. 1 zeigt eine schematische Schnittansicht eines Bauteils 10 während seiner erfindungsgemäßen Herstellung, bei welchem es sich vorliegend beispielhaft um ein Panel eines Flugtriebwerks handelt. Das Bauteil 10 wird dabei additiv aus einem Pulver einer schwer schweißbaren Legierungen - beispielsweise M 247 - mit Hilfe einer selektiven Laserstrahlschmelzvorrichtung (nicht gezeigt) hergestellt. Grundsätzlich können aber auch andere Strahlschmelzprozesse, beispielsweise Elektronenstrahlschweißen, verwendet werden.

Zum Herstellen wird zunächst eine erste Pulverschicht (nicht gezeigt) auf eine Bauteilplattform 14 der selektiven Laserstrahlschmelzvorrichtung im Bereich einer Aufbau- und Fügezone 16 aufgebracht. Anstelle der gezeigten Bauteilplattform 14 kann grundsätzlich auch ein Substrat verwendet werden. Mit Hilfe eines Laserstrahls wird die erste Pulverschicht anschließend selektiv beaufschlagt, so dass parallele erste Spuren 18 durch vollständiges Aufschmelzen der ersten Pulverschicht erzeugt werden, die ein welliges Profil auf der verfestigten Oberfläche des Bauteils 10 bilden. Durch die Kapillarwirkung des Schmelzbades kommt es dabei zu einer Materialanhäufung ("Hügel" bzw. Spuren 18) in der Mitte der Laserspur. Man erkennt, dass ein seitlicher Abstand der ersten Spuren 18 zueinander so gewählt ist, dass zwischen den ersten Spuren 18 erste Senken 20 gebildet werden. Im gezeigten Ausführungsbeispiel überlappen die ersten Spuren 18 seitlich nicht miteinander. Es kann aber auch vorgesehen sein, dass die ersten Spuren 18 einen seitlichen Überlappungsgrad aufweisen, der vorzugsweise höchstens 30 % der Gesamtbreite jeder betreffenden Spur 18 beträgt. Vorzugsweise werden die ersten Spuren 18 derart hergestellt, dass die Oberfläche des Bauteils 10 zumindest im Bereich der ersten Spuren 18 frei oder zumindest im Wesentlichen frei von Pulverresten ist. Mit anderen Worten soll sich nach diesem Arbeitsgang vorzugsweise kein Pulvermaterial mehr in diesem Oberflächenbereich des Bauteils 10 befinden.

In einem nächsten Schritt wird eine zweite Pulverschicht 12 auf die Bauteilplattform 14 aufgetragen. Dabei kann es grundsätzlich vorgesehen sein, dass für die erste Pulverschicht 12 und die zweite Pulverschicht 26 gleiche oder unterschiedliche Pulverwerkstoffe verwendet werden. Man erkennt in Fig. 1, dass die zweite Pulverschicht 12 die "Täler", das heißt die ersten Senken 20 im gezeigten Ausführungsbeispiel vollständig auffüllt. Anschließend wird die zweite Pulverschicht 12 lokal verschmolzen, indem der Hochenergiestrahl im Bereich der Aufbau- und Fügezone 16 relativ zur Bauteilplattform 14 bewegt wird und die zweite Pulverschicht 12 selektiv beaufschlagt. Hierdurch werden zwischen den ersten Spuren 18 parallele zweite Spuren 22 durch teilweises oder vollständiges Aufschmelzen der in den ersten Senken 20 angeordneten zweiten Pulverschicht 12 erzeugt, wobei die ersten Spuren 18 und die zweiten Spuren 22 miteinander fluchten bzw. die gleiche Höhe besitzen. Die resultierende Bauteilschicht 28 besitzt damit eine zumindest im Wesentlichen ebene Oberfläche. Dieser Zustand des Bauteils 10 ist gemäß der Ausführungsform in Fig. 2 in einer schematischen Schnittansicht dargestellt. Mit anderen Worten wird nach dem Erzeugen der ersten Spuren 18 neu zugeführtes Pulvermaterial geschmolzen, um aus "Tälern" (Senken 20) "Hügel" (Spuren 22) zu machen. Die Versetzung der Scanvektoren des Laserstrahls zwischen der "Hügelposition" und der "Talposition" erfolgt somit erst nach erneutem Pulverauftrag. Durch die Versetzung der Scanvektoren entsteht eine Art verschachteltes Wellenprofil (wellenförmige Schichten), wodurch sich die Rissbeständigkeit der Schweißspur verbessert. Dadurch wird im Endgefüge bzw. im fertigen Bauteil 10 die Rissbildung entsprechend reduziert oder vorzugsweise vollständig vermieden.

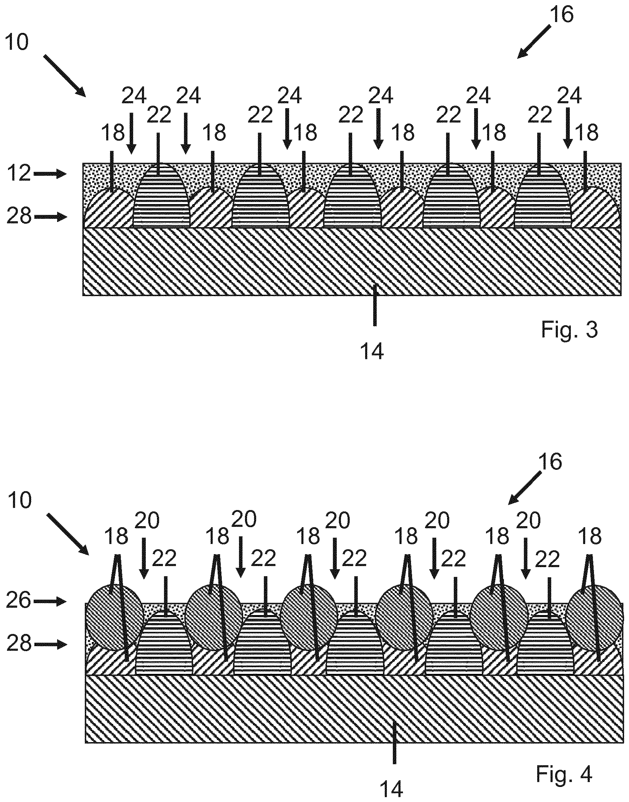

Eine alternative, nicht erfindungsgemäße Ausführungsform dieses Arbeitsschritts ist in Fig. 3 in einer schematischen Schnittansicht gezeigt. In diesem Fall wurde die Bauteilplattform 14 vor dem Aufbringen der zweiten Pulverschicht 12 abgesenkt, so dass die resultierende zweite Pulverschicht 12 eine größere Dicke als bei der in Fig. 2 gezeigten ersten Ausführungsform aufweist. Damit überragen die zweiten Spuren 22 die ersten Spuren 18, so dass sich durch diesen Arbeitsgang zweite Senken 24 zwischen den zweiten Spuren 22 bilden. Die derart hergestellte Bauteilschicht 28 besitzt damit eine wellige Oberfläche. Die zweiten Senken 24 bleiben im vorliegenden Fall mit Resten der zweiten Pulverschicht 12 gefüllt. Alternativ kann es vorgesehen sein, dass sich auch nach diesem Arbeitsgang vorzugsweise kein Pulvermaterial mehr in diesem Oberflächenbereich des Bauteils 10 befindet.

Fig. 4 zeigt schließlich eine schematische Schnittansicht des Bauteils 10 während seiner nicht-erfindungsgemäßen Herstellung, bei welchem in einem weiteren Verfahrensdurchgang erneut erste Spuren 18 in einer neu aufgebrachten ersten Pulverschicht 26 erzeugt sind. Man erkennt, dass die neuen ersten Spuren 18 unmittelbar auf den ersten Spuren 18 der vorhergehenden Bauteilschicht erzeugt werden. Anschließend wird in der oben beschriebenen Weise eine neue zweite Pulverschicht 12 aufgebracht und lokal aufgeschmolzen, um neue zweite Spuren 22 zu bilden, die dementsprechend unmittelbar auf den zweiten Spuren 22 der darunter liegenden Bauteilschicht angeordnet sind. Diese Schritte werden dann für jede Bauteilschicht 28 bis zur Fertigstellung des Bauteils 10 wiederholt.

### Bezugszeichenliste:

- 10: Bauteil
- 12: zweite Pulverschicht
- 14: Bauteilplattform
- 16: Fügezone
- 18: erste Spur
- 20: erste Senke
- 22: zweite Spur
- 24: zweite Senke
- 26: erste Pulverschicht
- 28: Bauteilschicht

## Patentansprüche

1. Verfahren zum additiven Herstellen oder zur Reparatur oder Wiederherstellung zumindest eines Bauteilbereichs eines Bauteils (10), insbesondere eines Bauteils (10) einer Strömungsmaschine, umfassend zumindest folgende Schritte:
a) Auftragen wenigstens einer ersten Pulverschicht (26) auf eine Bauteilplattform (14) im Bereich einer Aufbau- und Fügezone (16);
b) lokales Verschmelzen der ersten Pulverschicht (26), indem wenigstens ein Hochenergiestrahl im Bereich der Aufbau- und Fügezone (16) relativ zur Bauteilplattform (14) bewegt wird und die erste Pulverschicht (26) selektiv beaufschlagt, so dass parallele erste Spuren (18) in Form einer Parallelenschar durch teilweises oder vollständiges Aufschmelzen der ersten Pulverschicht (26) erzeugt werden, wobei zwischen den ersten Spuren (18) erste Senken (20) gebildet werden;
c) Auftragen wenigstens einer zweiten Pulverschicht (12) auf die Bauteilplattform (14) im Bereich der Aufbau- und Fügezone (16) ohne Absenken der Bauteilplattform (14), so dass die zweite Pulverschicht (12) die ersten Senken (20) teilweise oder vollständig auffüllt; und
d) lokales Verschmelzen der zweiten Pulverschicht (12), indem der Hochenergiestrahl im Bereich der Aufbau- und Fügezone (16) relativ zur Bauteilplattform (14) bewegt wird und die zweite Pulverschicht (12) selektiv beaufschlagt, so dass zu den ersten Spuren (18) parallele zweite Spuren (22) durch teilweises oder vollständiges Aufschmelzen der in den ersten Senken (20) angeordneten zweiten Pulverschicht (12) erzeugt werden, wobei die ersten Spuren (18) und die zweiten Spuren (22) miteinander fluchten bzw. die gleiche Höhe besitzen,
wobei ein Pulver einer schwer schweißbaren Metalllegierung zum Aufbringen der ersten und/oder der zweiten Pulverschicht (26, 12) verwendet wird.

2. Verfahren nach Anspruch 1,
**dadurch gekennzeichnet, dass**
die Schritte a) bis d) mehrfach und/oder bis zur Fertigstellung des Bauteilbereichs oder des Bauteils (10) wiederholt werden.

3. Verfahren nach Anspruch 2,
**dadurch gekennzeichnet, dass**
die ersten Spuren (18) bei jeder Wiederholung der Schritte a) bis d) über den ersten Spuren (18) einer darunter liegenden Bauteilschicht (28) erzeugt werden und dass die zweiten Spuren bei jeder Wiederholung der Schritte a) bis d) über den zweiten Spuren einer darunter liegenden Bauteilschicht (28) erzeugt werden.

4. Verfahren nach einem der Ansprüche 1 bis 3,
**dadurch gekennzeichnet, dass**
die ersten Spuren (18) mit einer seitlichen Überlappung von höchstens 30 % erzeugt werden.

5. Verfahren nach einem der Ansprüche 1 bis 4,
**dadurch gekennzeichnet, dass**
die ersten Spuren (18) in Schritt b) derart aufgeschmolzen werden, dass die ersten Senken (20) pulverfrei sind.

6. Vorrichtung zur additiven Herstellung oder zur Reparatur oder Wiederherstellung zumindest eines Bauteilbereichs eines Bauteils (10), insbesondere eines Bauteils (10) einer Strömungsmaschine, umfassend:
- mindestens eine Pulverzuführung zum Auftrag von mindestens einer Pulverschicht (12, 26) auf eine Aufbau- und Fügezone (16) einer Bauteilplattform (14);
- mindestens eine Strahlungsquelle zum Erzeugen wenigstens eines Hochenergiestrahls, mittels welchem die mindestens eine Pulverschicht (12, 26) im Bereich der Aufbau- und Fügezone (16) lokal verschmelzbar ist; und
- eine Bewegungseinrichtung, mittels welcher der wenigstens eine Hochenergiestrahl und die Bauteilplattform (14) relativ zueinander bewegbar sind;
**dadurch gekennzeichnet, dass**
eine Steuereinrichtung vorgesehen ist, welche dazu ausgebildet ist:
- die Bewegungseinrichtung zunächst derart anzusteuern, dass der Hochenergiestrahl eine erste Pulverschicht (26) selektiv beaufschlagt, so dass parallele erste Spuren (18) in Form einer Parallelenschar durch teilweises oder vollständiges Aufschmelzen der ersten Pulverschicht (26) erzeugt werden, wobei zwischen den ersten Spuren (18) erste Senken (20) gebildet werden;
- die Pulverzuführung anschließend derart anzusteuern, dass wenigstens eine zweite Pulverschicht (12) ohne Absenken der Bauteilplattform (14) auf die Bauteilplattform (14) im Bereich der Aufbau- und Fügezone (16) aufgetragen wird, welche die ersten Senken (20) teilweise oder vollständig auffüllt; und
- die Bewegungseinrichtung anschließend derart anzusteuern, dass der Hochenergiestrahl die zweite Pulverschicht (12) selektiv beaufschlagt, so dass zu den ersten Spuren (18) parallele zweite Spuren (22) durch teilweises oder vollständiges Aufschmelzen der in den ersten Senken (20) angeordneten zweiten Pulverschicht (12) erzeugt werden, wobei die ersten Spuren (18) und die zweiten Spuren (22) miteinander fluchten bzw. die gleiche Höhe besitzen,
wobei ein Pulver einer schwer schweißbaren Metalllegierung zum Aufbringen der ersten und/oder der zweiten Pulverschicht (26, 12) verwendet wird.

7. Vorrichtung nach Anspruch 6,
**dadurch gekennzeichnet, dass**
diese als selektive Laserschmelzvorrichtung und/oder als Elektronenstrahlschmelzvorrichtung ausgebildet ist.

## Claims

1. Method for additively manufacturing or repairing or restoring at least one component region of a component (10), in particular a component (10) of a turbomachine, comprising at least the following steps:
a) applying at least one first powder layer (26) to a component platform (14) in the region of a build-up and joining zone (16);
b) locally melting the first powder layer (26) by at least one high-energy beam being moved relative to the component platform (14) in the region of the build-up and joining zone (16) and selectively striking the first powder layer(26) so that parallel first tracks (18) in the form of a parallel array are generated by partial or complete fusion of the first powder layer (26), wherein first depressions (20) are formed between the first tracks (18);
c) applying at least one second powder layer (12) to the component platform (14) in the region of the build-up and joining zone (16) without lowering the component platform (14), so that the second powder layer (12) partially or completely fills the first depressions (20); and
d) locally melting the second powder layer (12) by the high-energy beam being moved relative to the component platform (14) in the region of the build-up and joining zone (16) and selectively striking the second powder layer (12) so that second tracks (22) parallel to the first tracks (18) are generated by partial or complete fusion of the second powder layer (12) arranged in the first depressions (20), wherein the first tracks (18) and the second tracks (22) are aligned with one other or have the same height,
wherein a powder of a metal alloy which is difficult to weld is used for applying the first and/or the second powder layer (26, 12).

2. Method according to claim 1,
**characterized in that**
steps a) to d) are repeated multiple times and/or until the component region or the component (10) is completed.

3. Method according to claim 2,
**characterized in that**
the first tracks (18) are generated above the first tracks (18) of an underlying component layer (28) with each repetition of steps a) to d), and **in that** the second tracks are generated above the second tracks of an underlying component layer (28) with each repetition of steps a) to d).

4. Method according to any of claims 1 to 3,
**characterized in that**
the first tracks (18) are generated with a lateral overlap of at most 30%.

5. Method according to any of claims 1 to 4,
**characterized in that**
the first tracks (18) are fused in step b) in such a way that the first depressions (20) are powder-free.

6. Device for additively manufacturing or repairing or restoring at least one component region of a component (10), in particular a component (10) of a turbomachi ne, comprising:
- at least one powder feed for applying at least one powder layer (12, 26) to a build - up and joining region (16) of a component platform (14);
- at least one radiation source for generating at least one high-energy beam, by means of which the at least one powder layer (12, 26) can be locally melted in the region of the build-up and joining zone (16); and
- a movement device by means of which the at least one high-energy beam and the component platform (14) can be moved relative to one another;
**characterized in that**
a control device is provided which is designed:
- to control the movement device initially in such a way that the high-energy beam selectively strikes a first powder layer (26) so that parallel first tracks (18) in the form of a parallel array are generated by partial or complete fusion of the first powder layer (26), with first depressions (20) being formed between the first tracks (18);
- then to control the powder feed in such a way that at least one second powder layer (12) is applied to the component platform (14) in the region of the build-up and joining zone (16) without lowering the component platform (14), which second powder layer partially or completely fills the first depressions (20); and
- then to control the movement device in such a way that the high-energy beam selectively strikes the second powder layer (12) so that second tracks (22) parallel to the first tracks (18) are generated by partial or complete fusion of the second powder layer (12) arranged in the first depressions (20), wherein the first tracks (18) and the second tracks (22) are aligned with one other or have the same height, wherein a powder of a metal alloy which is difficult to weld is used for applying the first and/or the second powder layer (26, 12).

7. Device according to claim 6,
**characterized in that**
it is designed as a selective laser melting device and/or as an electron beam melting device.

## Revendications

1. Procédé destiné à la fabrication additive ou à la réparation ou à la restauration d'au moins une région de composant d'un composant (10), en particulier d'un composant (10) d'une turbomachine, comprenant au moins les étapes suivantes :
a) application d'au moins une première couche de poudre (26) sur une plate-forme de composant (14) dans une région d'une zone de constitution et d'assemblage (16) ;
b) fusion locale de la première couche de poudre (26) en déplaçant au moins un faisceau à haute énergie dans une région de la zone de constitution et d'assemblage (16) par rapport à la plate-forme de composant (14) et en agissant sélectivement sur la première couche de poudre (26), de sorte que des premières pistes (18) parallèles en forme d'un ensemble de parallèles sont générées par fusion partielle ou entière de la première couche de poudre (26), des premières dépressions (20) étant formées entre les premières pistes (18) ;
c) application d'au moins une seconde couche de poudre (12) sur la plate-forme de composant (14) dans une région de la zone de constitution et d'assemblage (16) sans abaisser la plate-forme de composant (14), de sorte que la seconde couche de poudre (12) remplit partiellement ou entièrement les premières dépressions (20) ; et
d) fusion locale de la seconde couche de poudre (12) en déplaçant le faisceau à haute énergie dans une région de la zone de constitution et d'assemblage (16) par rapport à la plate-forme de composant (14) et en agissant sélectivement sur la seconde couche de poudre (12), de sorte que des secondes pistes (18) parallèles aux premières pistes (22) sont générées par fusion partielle ou entière de la seconde couche de poudre (12) disposée dans les premières dépressions (20), les premières pistes (18) et
les secondes pistes (22) étant alignées les unes avec les autres ou possédant la même hauteur,
dans lequel une poudre d'un alliage métallique difficile à souder est utilisée pour appliquer la première et/ou la seconde couche de poudre (26, 12).

2. Procédé selon la revendication 1,
**caractérisé en ce**
**que** les étapes a) à d) sont répétées plusieurs fois et/ou jusqu'à ce que la région de composant ou le composant (10) soit achevé(e).

3. Procédé selon la revendication 2,
**caractérisé en ce**
**que** les premières pistes (18) sont générées sur les premières pistes (18) d'une couche de composant (28) sous-jacente à chaque répétition des étapes a) à d) et que les secondes pistes sont générées sur les secondes pistes d'une couche de composant (28) sous-jacente à chaque répétition des étapes a) à d).

4. Procédé selon l'une des revendications 1 à 3,
**caractérisé en ce**
**que** les premières pistes (18) sont générées avec un recouvrement latéral d'au plus 30 %.

5. Procédé selon l'une des revendications 1 à 4,
**caractérisé en ce**
**que** les premières pistes (18) sont fondues à l'étape b) de telle sorte que les premières dépressions (20) sont exemptes de poudre.

6. Dispositif destiné à la fabrication additive ou à la réparation ou à la restauration d'au moins une région de composant d'un composant (10), en particulier d'un composant (10) d'une turbomachine, comprenant :
- au moins une alimentation en poudre permettant d'appliquer au moins une couche de poudre (12, 26) sur une zone de constitution et d'assemblage (16) d'une plate-forme de composant (14) ;
- au moins une source de rayonnement permettant de générer au moins un faisceau à haute énergie, au moyen duquel l'au moins une couche de poudre (12, 26) peut être localement fondue dans une région de la zone de constitution et d'assemblage (16) ; et
- un appareil de déplacement au moyen duquel l'au moins un faisceau à haute énergie et la plate-forme de composant (14) peuvent être déplacés l'un par rapport à l'autre ;
**caractérisé en ce**
**qu'**un appareil de commande est prévu, lequel est configuré pour :
- commander d'abord l'appareil de déplacement de telle sorte que le faisceau à haute énergie agit sélectivement sur une première couche de poudre (26), de sorte que des premières pistes (18) parallèles sous la forme d'un ensemble de parallèles sont générées par fusion partielle ou entière de la première couche de poudre (26), des premières dépressions (20) étant formées entre les premières pistes (18) ;
- puis commander l'alimentation en poudre de telle sorte qu'au moins une seconde couche de poudre (12) est appliquée sur la plate-forme de composant (14) dans une région de la zone de constitution et d'assemblage (16) sans abaisser la plate-forme de composant (14), laquelle seconde couche de poudre remplit partiellement ou entièrement les premières dépressions (20) ; et
- commander ensuite l'appareil de déplacement de telle sorte que le faisceau à haute énergie agit sélectivement sur la seconde couche de poudre (12), de sorte que des secondes pistes (22) parallèles aux premières pistes (18) sont générées par fusion partielle ou entière de la seconde couche de poudre (12) disposée dans les premières dépressions (20), les premières pistes (18) et les secondes pistes (22) étant alignées les unes avec les autres ou possédant la même hauteur, dans lequel une poudre d'un alliage métallique difficile à souder est utilisée pour appliquer la première et/ou la seconde couche de poudre (26, 12).

7. Dispositif selon la revendication 6,
**caractérisé en ce**
**que** celui-ci est conçu comme un dispositif de fusion laser sélectif et/ou comme un dispositif de fusion par faisceau d'électrons.
